# EUROPEAN PATENT APPLICATION

(11) **EP 4 155 899 A1**
(43) Date of publication of application: **29.03.2023**
(21) Application number: 21812090.5
(22) Date of filing: 15.04.2021
(51) Int. Cl.: G06F 3/147

(54) **DEVICE CONTROL METHOD AND APPARATUS, STORAGE MEDIUM, AND ELECTRONIC DEVICE**

(30) Priority: 27.05.2020 CN 202010464181
(71) Applicant: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Thorniley, Peter
(86) International application number: PCT/CN2021/087589
(87) International publication number: WO 2021/238493

(57) **Abstract**

The present disclosure discloses a device control method and apparatus, a storage medium, and an electronic device. The device control method can be applied in an electronic device including a retractable display screen. The device control method includes: identifying a use scenario of the electronic device; and controlling, based on the use scenario, the retractable display screen to spread out or retract. The present disclosure can improve operability of the electronic device.

## Description

This application claims priority to Chinese Patent Application No. 202010464181.9, entitled "DEVICE CONTROL METHOD AND APPARATUS, STORAGE MEDIUM, AND ELECTRONIC DEVICE", filed with China National Intellectual Property Administration on May 27, 2020, the entire disclosure of which is incorporated herein by reference.

### FIELD

The present disclosure belongs to the field of electronic device technologies, and more particularly, to a device control method and apparatus, a storage medium, and an electronic device.

### BACKGROUND

With the continuous development of technologies, the shape of electronic devices is changing, e.g., from a small screen to a large screen, from a display screen that is simply used to display images and texts to a touch display screen that can receive touch operations of a user, etc.

### SUMMARY

Embodiments of the present disclosure provide a device control method and apparatus, a storage medium, and an electronic device, capable of improving operability of the electronic device.

In a first aspect, according to an embodiment of the present disclosure, a device control method is provided. The device control method is applied in an electronic device including a retractable display screen. The method includes: identifying a use scenario of the electronic device; and controlling, based on the use scenario, the retractable display screen to spread out or retract.

In a second aspect, according to an embodiment of the present disclosure, a device control apparatus is provided. The device control apparatus is applied in an electronic device including a retractable display screen. The apparatus includes: an identification module configured to identify a use scenario of the electronic device; and a control module configured to control, based on the use scenario, the retractable display screen to spread out or retract.

In a third aspect, according to an embodiment of the present disclosure, a storage medium is provided. The storage medium has a computer program stored thereon. The computer program, when executed on a computer, causes the computer to perform processes of the device control method according to the embodiments of the present disclosure.

In a fourth aspect, according to an embodiment of the present disclosure, an electronic device is further provided. The electronic device includes a memory and a processor. The processor is configured to perform, through invoking a computer program stored in the memory, processes of the device control method according to the embodiments of the present disclosure.

### BRIEF DESCRIPTION OF DRAWINGS

Technical solutions of the present disclosure and their advantageous effects will become apparent through the following detailed description of specific implementations of the present disclosure made in conjunction with the accompanying drawings.
FIGS. 1 to 5 are each a schematic structural diagram of an electronic device according to an embodiment of the present disclosure.
FIG. 6 is a flowchart of a device control method according to an embodiment of the present disclosure.
FIG. 7 is another flowchart of a device control method according to an embodiment of the present disclosure.
FIGS. 8 to 14 are each a schematic diagram showing a scenario of a device control method according to an embodiment of the present disclosure.
FIG. 15 is yet another flowchart of a device control method according to an embodiment of the present disclosure.
FIGS. 16 to 18 are each a schematic diagram showing another scenario of a device control method according to an embodiment of the present disclosure.
FIG. 19 is a block diagram showing a structure of a device control apparatus according to an embodiment of the present disclosure.
FIG. 20 is a block diagram showing a structure of an electronic device according to an embodiment of the present disclosure.
FIG. 21 is another block diagram showing a structure of an electronic device according to an embodiment of the present disclosure.

### DESCRIPTION OF EMBODIMENTS

In the drawings, same components are denoted by same member symbols. Principles of the present disclosure are illustrated exemplarily by way of implementation in an appropriate computing environment. The following description is based on illustrated specific embodiments of the present disclosure and should not be construed as limiting other specific embodiments of the present disclosure that are not detailed herein.

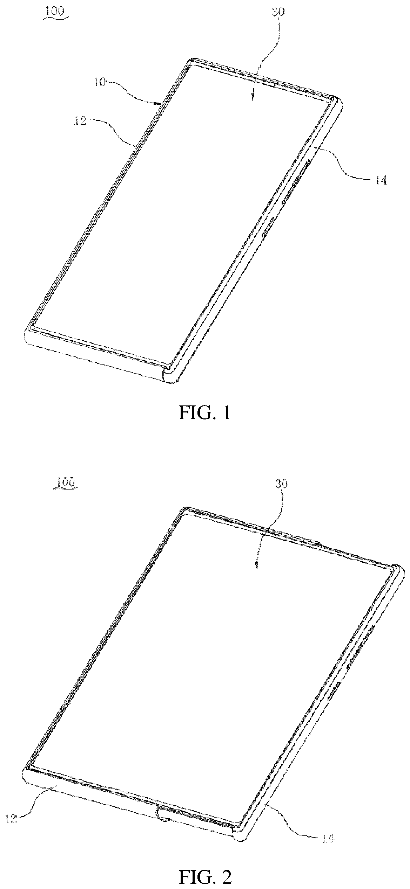

Reference may be made to FIG. 1 to FIG. 3, each of which is a schematic structural diagram of an electronic device having a retractable touch display screen according to embodiments of the present disclosure.

According to an embodiment of the present disclosure, an electronic device 100 includes a housing assembly 10, a flexible display screen 30, a transmission member 50, and a drive mechanism 70. The housing assembly 10 is of a hollow structure. Components such as the transmission member 50, the drive mechanism 70, and a camera 90 may all be disposed in the housing assembly 10. It can be understood that in this embodiment, the electronic device 100 includes, but is not limited to, mobile terminals such as mobile phones and tablet computers or other portable electronic devices. In the present disclosure, the electronic device 100 is described as a mobile phone as an example.

According to an embodiment of the present disclosure, the housing assembly 10 includes a first housing 12 and a second housing 14 that are movable relative to each other. In this embodiment, the first housing 12 and the second housing 14 are slidably connected to each other. That is, the second housing 14 is slidable relative to the first housing 12.

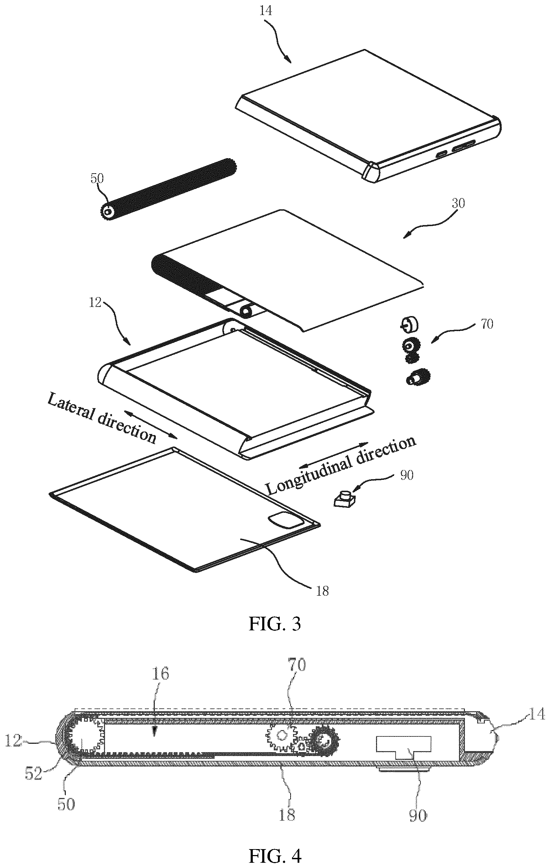

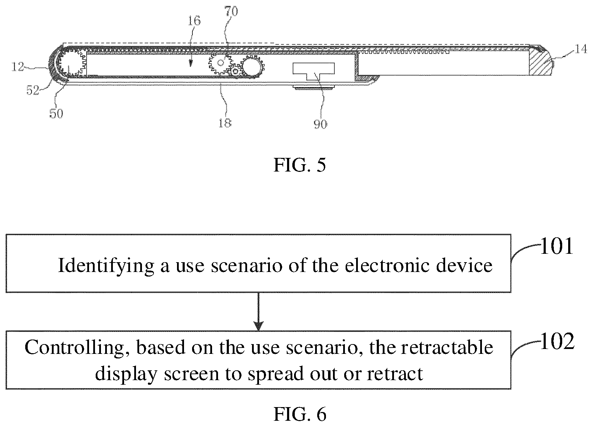

Referring to FIG. 4 and FIG. 5, an accommodation space 16 is defined by the first housing 12 and the second housing 14. The accommodation space 16 may be configured to hold components such as the transmission member 50, the camera 60, and the drive mechanism 70. The housing assembly 10 may further include a rear cover 18. The accommodation space 16 may be defined by the rear cover 18, the first housing 12, and the second housing 14.

The transmission member 50 is disposed on the second housing 14. One end of the flexible display screen 30 is disposed on the first housing 12. The flexible display screen 30 passes around the transmission member 50. The other end of the flexible display screen 30 is disposed in the accommodation space 16 to partially hide the flexible display screen 30 in the accommodation space 16. The part of the flexible display screen 30 hidden in the accommodation space 16 may not be lit up. Movement of the first housing 12 and the second housing 14 away from each other can drive the flexible display screen 30 to spread out through the transmission member 50 in such manner that more of the flexible display screen 30 is exposed outside the accommodation space 16, as illustrated in FIG. 5. The flexible display screen 30 exposed outside the accommodation space 16 is lit up to increase a display area presented by the electronic device 100. For example, FIG. 1 and FIG. 2 may illustrate a comparison of a change in an appearance of the flexible display screen 30 of the electronic device from a retracted state to a laterally spread state.

The transmission member 50 may be of a rotating shaft structure having external teeth 52. The flexible display screen 30 and the transmission member 50 are movable in linkage through manners such as engagement. When the first housing 12 and the second housing 14 are moved away from each other, a part of the flexible display screen 30 engaged on the transmission member 50 is driven, through the transmission member 50, to move and to spread out.

It can be understood that the transmission member 50 may alternatively be a circular shaft without teeth 52. The movement of the first housing 12 and the second housing 14 away from each other drives, through the transmission member 50, a part of the flexible display screen 30 wound on the transmission member 50 to spread out to expose more of the flexible display screen outside the accommodation space 16 in a flattened state. Specifically, the transmission member 50 is rotatably disposed on the second housing 14 and can rotate with the movement of the flexible display screen 30 when the flexible display screen 30 gradually spreads out.

In some other embodiments, the transmission member 50 may be fixed on the second housing 14 and have a smooth surface. During the spreading of the flexible display screen 30, the transmission member 50 is in slidable contact with the flexible display screen 30 through its smooth surface.

When the first housing 12 and the second housing 14 are moved towards each other, the flexible display screen may be driven, through the transmission member 50, to retract. Alternatively, the electronic device 100 may further include a reset member (not shown in the figures); the end of the flexible display screen received in the accommodation space 16 and the reset member are movable in linkage; and when the first housing 12 and the second housing 14 are moved towards each other, the reset member drives the flexible display screen 30 to reset, allowing a part of the flexible display screen to retract into the accommodation space 16.

In an embodiment, the drive mechanism 70 may be disposed in the accommodation space 16, and may be movable in linkage with the second housing 14. The drive mechanism 70 is configured to drive the second housing 14 to move away from the first housing 12 to drive the flexible display screen assembly 30 to spread out. It can be understood that the drive mechanism 70 may be omitted and a user can directly make the first housing and the second housing move relative to each other by hand or other means.

It should be noted that in addition to a hardware layout design illustrated in FIGS. 1 to 5 allowing the flexible display screen to spread out or retract in a lateral direction of the electronic device (e.g., a left-right direction), a direction of the hardware layout design may be changed to allow the flexible display screen to spread out or retract in a longitudinal direction of the electronic device (e.g., an up-down direction) in some other embodiments.

It can be understood that an executive subject of embodiments of the present disclosure may be an electronic device such as a smartphone or a tablet computer.

According to an embodiment of the present disclosure, a device control method is provided. The device control method is applied in an electronic device including a retractable display screen. The method includes: identifying a use scenario of the electronic device; and controlling, based on the use scenario, the retractable display screen to spread out or retract.

In an implementation, said controlling, based on the use scenario, the retractable display screen to spread out or retract may include: controlling, in response to the use scenario belonging to a first predetermined category of scenarios, the retractable display screen to spread out. The first predetermined category of scenarios is adapted to use a large-sized screen.

In an implementation, said controlling, based on the use scenario, the retractable display screen to spread out or retract may include: controlling, in response to the use scenario belonging to a second predetermined category of scenarios, the retractable display screen to retract. The second predetermined category of scenarios is adapted to use a small-sized screen.

In an implementation, said controlling, in response to the use scenario belonging to the first predetermined category of scenarios, the retractable display screen to spread out may include: controlling, in response to the use scenario belonging to the first predetermined category of scenarios and the retractable display screen not spreading out to a maximum extent, the retractable display screen to spread out, until the retractable display screen spreads out to the maximum extent.

In an implementation, said controlling, in response to the use scenario belonging to the first predetermined category of scenarios and the retractable display screen not spreading out to the maximum extent, the retractable display screen to spread out, until the retractable display screen spreads out to the maximum extent may include: detecting, in response to the use scenario belonging to the first predetermined category of scenarios, whether a picture displayed by the electronic device is in a stationary state; and controlling, in response to the picture displayed by the electronic device not being in the stationary state and the retractable display screen not spreading out to the maximum extent, the retractable display screen to spread out, until the retractable display screen spreads out to the maximum extent.

In an implementation, the method may further include: obtaining, in response to the picture displayed by the electronic device being in the stationary state, a first time length for which the picture displayed by the electronic device has been in the stationary state; generating prompt information in response to the first time length being greater than or equal to a first predetermined threshold, the prompt information being configured to query whether to retract the retractable display screen; and receiving feedback information, and performing, based on the feedback information, spreading or retraction control on the retractable display screen, the feedback information being feedback to the prompt information.

In an implementation, said controlling, in response to the use scenario belonging to the second predetermined category of scenarios, the retractable display screen to retract may include: obtaining, in response to the use scenario belonging to the second predetermined category of scenarios, a second time length for which the electronic device has been in the use scenario; and controlling, in response to the second time length being greater than or equal to a second predetermined threshold and the retractable display screen not retracting to a maximum extent, the retractable display screen to retract, until the retractable display screen retracts to the maximum extent.

In an implementation, said controlling, based on the use scenario, the retractable display screen to spread out or retract may include: obtaining, in response to the use scenario belonging to a first predetermined category of scenarios, a current width-to-height ratio of the display screen of the electronic device, the first predetermined category of scenarios being adapted to use a large-sized screen; controlling, in response to the current width-to-height ratio being unequal to a predetermined width-to-height ratio, the retractable display screen to undergo a spreading or retraction adjustment, to adjust a width-to-height ratio of the display screen to the predetermined width-to-height ratio; and displaying, after the width-to-height ratio of the display screen is adjusted to the predetermined width-to-height ratio, an image in a full screen mode.

FIG. 6 is a flowchart of a device control method according to an embodiment of the present disclosure. The device control method may be applied in an electronic device that may include a retractable display screen. Referring to FIG. 6, the device control method may include actions at 101 and 102.

At 101, a use scenario of the electronic device is identified.

With the continuous development of technologies, the shape of electronic devices is changing, e.g., from a small screen to a large screen, from a display screen that is simply used to display images and text to a touch display screen that can receive touch operations of the user, etc. However, in the related art, the electronic device is not flexible enough for the user to operate. That is, the electronic device has low operability.

It should be noted that according to the embodiments of the present disclosure, the electronic device may include the retractable display screen. The retractable display screen may be a retractable display panel. The retractable display screen may be a flexible display screen, which may be bent, curled, folded, etc. For an electronic device configured with the retractable display screen, a visible size of the screen can be increased by spreading the retractable display screen out or reduced by retracting the retractable display screen. For example, the flexible display screen 30 illustrated in each of FIG. 1 to FIG. 5 is the retractable display screen.

In the embodiments of the present disclosure, the electronic device may, e.g., firstly identify its current use scenario.

It should be noted that use scenarios of the electronic device may include scenarios such as playing a video, playing music, playing a game, screen ON with no operation, etc.

At 102, the retractable display screen is controlled, based on the use scenario, to spread out or retract.

For example, after the current use scenario of the electronic device is identified, the electronic device may control, based on the current use scenario, the retractable display screen to spread out or retract.

For example, when the current use scenario of the electronic device is identified as scenario A, the electronic device may control the retractable display screen to spread out; when the current use scenario of the electronic device is identified as scenario B, the electronic device may control the retractable display screen to retract; or the like.

It can be understood that in the embodiments of the present disclosure, the electronic device may firstly identify its use scenario and then control, based on the use scenario, the retractable display screen to spread out or retract. Since the electronic device according to the embodiments of the present disclosure may control, based on the use scenario, the retractable display screen to spread out or retract, the operability of the electronic device can be improved according to the embodiments of the present disclosure.

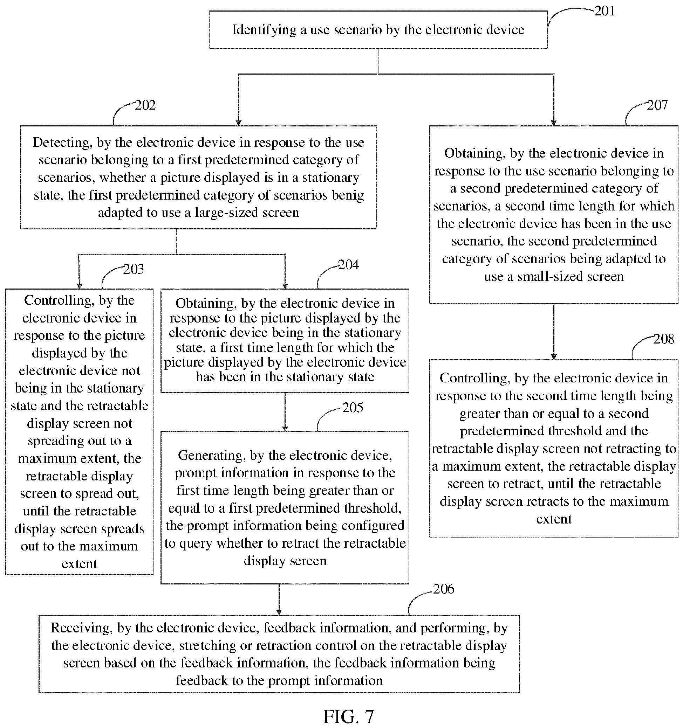

FIG. 7 is another flowchart of a device control method according to an embodiment of the present disclosure. The device control method may be applied in the electronic device that may include the retractable display screen. Referring to FIG. 7, the device control method may include actions at 201 to 208.

At 201, the electronic device identifies a use scenario.

For example, the electronic device may firstly identify its current use scenario.

Subsequently, the electronic device may detect whether its current use scenario belongs to a first predetermined category of scenarios or a second predetermined category of scenarios.

In response to detecting that its current use scenario belongs to the first predetermined category of scenarios, the action at 202 is performed. In some implementations, the first predetermined category of scenarios may be use scenarios adapted to use a large screen, e.g., playing a video, playing a game, etc.

In response to detecting that its current use scenario belongs to the second predetermined category of scenarios, the action at 207 is performed. In some implementations, the second predetermined category of scenarios may be use scenarios adapted to use a small screen, e.g., playing music only, screen ON with no operation, etc.

At 202, the electronic device detects, in response to the use scenario belonging to the first predetermined category of scenarios, whether a picture displayed is in a stationary state. The first predetermined category of scenarios is adapted to use a large-sized screen.

For example, the electronic device detects that its current use scenario is a video-playing scenario that belongs to the first predetermined category of scenarios. In this case, the electronic device may control the retractable display screen to spread out.

In an embodiment of the present disclosure, when detecting that the current use scenario of the electronic device belongs to the first predetermined category of scenarios, the electronic device may firstly detect whether a picture currently displayed is in the stationary state.

In response to detecting that the picture displayed by the electronic device is not in the stationary state, the action at 203 may be performed. For example, the electronic device is playing a video file and the picture displayed by the electronic device changes with the playback progress. That is, the picture displayed by the electronic device is not in the stationary state.

In response to detecting that the picture displayed by the electronic device is in the stationary state, the action at 204 may be performed. For example, an online video application is running in the foreground of the electronic device and the user uses the online video application to play a video file on demand. However, in the middle of playing the video file, the user clicks a pause button to pause in playing the video file. In this case, the picture displayed on the electronic device does not change with the playback progress. That is, the picture displayed on the electronic device is in the stationary state.

At 203, in response to the picture displayed by the electronic device not being in the stationary state and the retractable display screen not spreading out to a maximum extent, the electronic device controls the retractable display screen to spread out, until the retractable display screen spreads out to the maximum extent.

For example, the electronic device detects that the picture currently displayed is in a changing state and that the retractable display screen has not spread out to the maximum extent. In this case, the electronic device may control the retractable display screen to spread out until the retractable display screen spreads out to the maximum extent, i.e., until the retractable display screen fully spreads out.

It should be understood that according to the embodiments of the present disclosure, in a case where the electronic device is in the use scenario adapted to use the large screen (i.e., a scenario in the first predetermined category), the electronic device can automatically control, in response to detecting that the picture displayed by the electronic device is changing and the retractable display screen has not spread out to the maximum extent, the retractable display screen to fully spread out, thereby allowing the user to perform operations such as video playing, game playing, or the like using a large-sized screen, and thus improving use experience.

At 204, in response to the picture displayed by the electronic device being in the stationary state, the electronic device obtains a first time length for which the picture displayed by the electronic device has been in the stationary state.

At 205, the electronic device generates prompt information in response to the first time length being greater than or equal to a first predetermined threshold. The prompt information is configured to query whether to retract the retractable display screen.

At 206, the electronic device receives feedback information, and performs, based on the feedback information, spreading or retraction control on the retractable display screen. The feedback information is feedback to the prompt information.

For example, the actions at 204, 205, and 206 may include the following.

When detecting that the picture currently displayed is in the stationary state and is not changing, the electronic device may obtain a time length for which the displayed picture has been in the stationary state, i.e., the first time length. It can be understood that the first time length is information obtained by the electronic device about how long the picture displayed has not changed.

After obtaining the information about how long the picture displayed by the electronic device has not changed, i.e., the electronic device may detect whether the first time length is greater than or equal to the first predetermined threshold.

When the first time length is detected to be greater than or equal to the first predetermined threshold, it may be assumed that the picture displayed by the electronic device has not changed for a long time. In this case, the electronic device may generate the prompt information, which may be configured to query the user whether the retractable display screen needs to retract.

Afterwards, the electronic device may receive the feedback information for the above-mentioned prompt information from the user, and perform, based on the feedback information, the spreading or retraction control on the retractable display screen. For example, when the user instructs the electronic device to retract the retractable display screen, the electronic device may control the retractable display screen to retract. For example, when the user instructs the electronic device that the retractable display screen does not have to be retracted, the electronic device may keep a state of the display screen unchanged, i.e., not retract the retractable display screen.

In response to detecting that the first time length is smaller than the first predetermined threshold, the electronic device may keep the state of the retractable display screen unchanged.

It could be understood that in the embodiments of the present disclosure, when the electronic device is in a use scenario belonging to the first predetermined category of scenarios, the electronic device may query, in response to detecting that the picture displayed by the electronic device has been in the stationary state for a long period of time without change, the user whether to retract the retractable display screen. In response to the user choosing to retract the retractable display screen, the electronic device may retract the retractable display screen to protect the retractable display screen. In response to the user choosing not to retract the retractable display screen, the electronic device may keep the state of the display screen unchanged. Therefore, according to the embodiments of the present disclosure, not only the operability of the electronic device and the user experience can be improved, but also the retractable display screen of the electronic device can be protected in certain scenarios.

At 207, the electronic device obtains, in response to the use scenario belonging to the second predetermined category of scenarios, a second time length for which the electronic device has been in the use scenario. The second predetermined category of scenarios are adapted to use a small-sized screen.

At 208, the electronic device controls, in response to the second time length being greater than or equal to a second predetermined threshold and the retractable display screen not retracting to a maximum extent, the retractable display screen to retract, until the retractable display screen retracts to the maximum extent.

For example, the actions at 207 and 208 may include the following.

The electronic device detects that its current use scenario belongs to the second predetermined category of scenarios. For example, the current use scenario is a scenario where the electronic device is playing music only. In this case, the electronic device may control the retractable display screen to retract.

For example, in the embodiments of the present disclosure, the electronic device may obtain, in response to detecting that the current use scenario belongs to the second predetermined category of scenarios, the second time length for which the electronic device has been in the current use scenario. For example, the current use scenario is a music-playing-only scenario. In this case, the electronic device may obtain a time length for which the electronic device has been in the music-playing-only scenario, i.e., the second time length.

Afterwards, the electronic device may detect whether the second time length is greater than or equal to the second predetermined threshold.

When the detected second time length for which the electronic device has been in the use scenario in the second predetermined category is greater than or equal to the second predetermined threshold, the electronic device may be considered to have been in the use scenario in the second predetermined category for a long period of time. In this case, the electronic device may further detect whether the retractable display screen has retracted to the maximum extent.

In response to detecting that the retractable display screen has not retracted to the maximum extent, the electronic device may control the retractable display screen to retract, until the retractable display screen retracts to the maximum extent, i.e., until the retractable display screen fully retracts.

In response to detecting that the retractable display screen has retracted to the maximum extent, the electronic device may keep the state of the retractable display screen unchanged.

In response to detecting that the second time length for which the electronic device has been in the use scenario in the second predetermined category is smaller than the second predetermined threshold, the electronic device may also keep the state of the retractable display screen unchanged.

It should be understood that according to the embodiments of the present disclosure, in a case where the electronic device has been in the use scenario adapted to use the small screen (i.e., a scenario in the second predetermined category) for a long period of time, the electronic device can automatically control, in response to detecting that the retractable display screen of the electronic device has not retracted to the maximum extent, the retractable display screen to fully retract and thus the retractable display screen can be protected.

In an implementation, the electronic device according to the embodiments of the present disclosure may further include a drive device configured to drive the retractable display screen to spread out or retract. When the retractable display screen needs to be controlled to spread out or retract, the electronic device may transmit a corresponding instruction to the drive device. After receiving the instruction, the drive device may drive, based on the instruction, the retractable display screen to spread out or retract.

In an implementation, the electronic device may identify the use scenario by the following manners. For example, the electronic device may obtain information such as a currently-running foreground application, a background application, environmental parameters of a current environment in which the electronic device is, and operating parameters of the electronic device. The electronic device may input the information into a pre-trained algorithm model, which outputs corresponding use scenario information, thereby obtaining the current use scenario of the electronic device.

In an implementation, in response to the electronic device failing to identify the current use scenario, or in response to the current use scenario identified by the electronic device belonging to neither the first predetermined category of scenarios nor the second predetermined category of scenarios, the electronic device may keep the state of the screen unchanged, without performing any control operation on the retractable display screen.

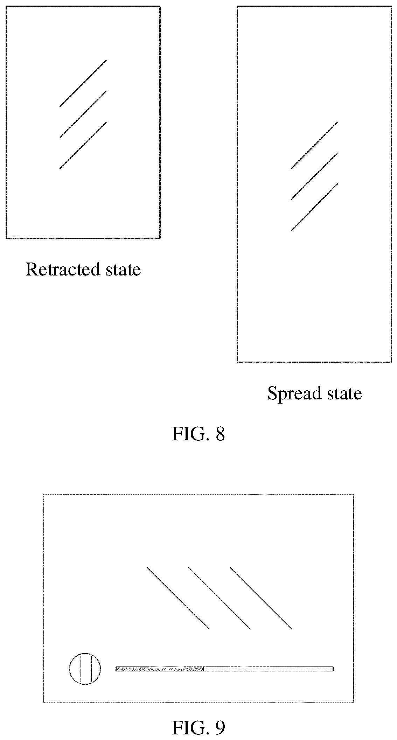

Reference may be made to FIGS. 8 to 14, which are each a schematic diagram showing a scenario of a device control method according to an embodiment of the present disclosure.

For example, the electronic device according to the embodiment may include the retractable touch display screen. The retractable touch display screen may be a retractable touch display panel. The retractable touch display screen may be a flexible display screen, which may be bent, curled, folded, etc. For the electronic device configured with the retractable touch display screen, the visible size of the screen can be increased by spreading the retractable touch display screen or reduced by retracting the retractable touch display screen.

In an embodiment of the present disclosure, description is made by taking the retractable display screen of the electronic device being a display screen retractable in the longitudinal direction (an up-down direction) as an example. For example, reference may be made to FIG. 8, which illustrates shapes of the screen of the electronic device when the retractable touch display screen is in a maximally retracted state (i.e., the display screen does not undergo any spreading) and when the retractable touch display screen is in a spread state.

In an embodiment of the present disclosure, the electronic device may identify the current use scenario and then detect whether the current use scenario belongs to the first predetermined category of scenarios or to the second predetermined category of scenarios. The first predetermined category of scenarios may include use scenarios adapted to use the large screen, such as video-playing scenarios, game-playing scenarios, etc. The second predetermined category of scenarios may be use scenarios adapted to use the small screen, e.g., music-playing-only scenarios, scenarios with screen on and no operation, etc. Of course, in addition to the scenarios listed above, the first predetermined category of scenarios and the second predetermined category of scenarios may further include other scenarios, which are not limited in the embodiments of the present disclosure.

For example, at a moment T1, the electronic device identifies that the current use scenario is a video-playing scenario and detects that the current video-playing scenario belongs to the first predetermined category of scenarios. In this case, the electronic device may further detect whether the picture displayed is in the stationary state.

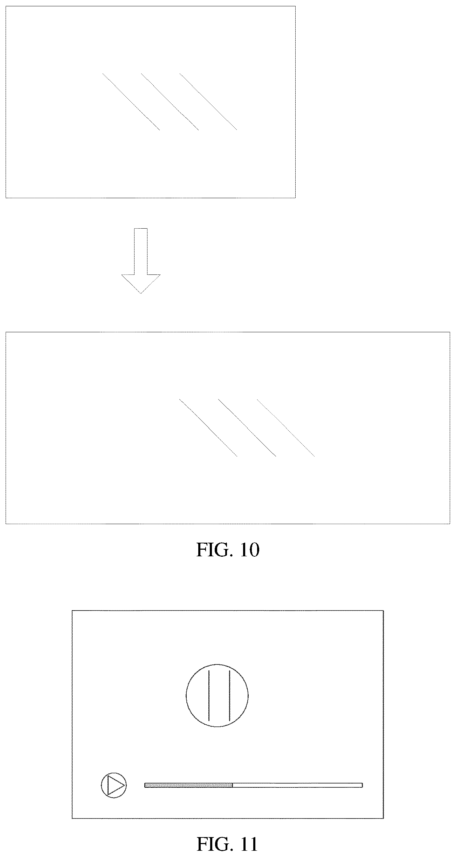

For example, as illustrated in FIG. 9, the electronic device detects that the picture displayed is not in the stationary state and that the picture displayed by the electronic device changes with the playback progress. In this case, the electronic device may detect whether the retractable touch display screen has spread out to the maximum extent. For example, the electronic device detects that the retractable touch display screen has not fully spread out. In this case, the electronic device may control the retractable touch display screen to spread out, until the retractable touch display screen fully spreads out. A change in the shape of the screen of the electronic device may be as illustrated in FIG. 10.

After a period of time, the user needs to deal with other matters and clicks on a button on the touch display screen used to suspend video playing, and thus the video is stopped from playing, as illustrated in FIG. 11. That is, at this moment, the electronic device detects that the picture displayed by the electronic device is already in the stationary state, i.e., the picture displayed by the electronic device has not changed, although the use scenario belongs to the first predetermined category of scenarios. In this case, the electronic device may obtain a time length for which the picture displayed has been in the stationary state and detect whether the time length is greater than or equal to the first predetermined threshold. For example, the picture displayed by the electronic device remains unchanged for a period of time afterwards. For example, at a moment T2, the electronic device detects that the time length for which the picture displayed has been in the stationary state has reached the first predetermined threshold. Then, it can be assumed that the picture displayed by the electronic device has not changed for a long time. In this case, the electronic device may generate the prompt information which may be configured to query the user whether the retractable touch display screen needs to be retracted.

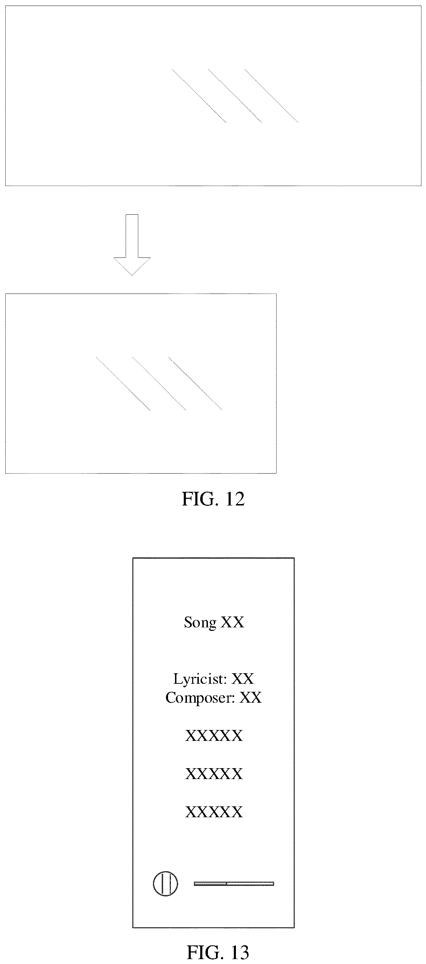

For example, after receiving the prompt information, the user selects to retract the retractable touch display screen, in which case the electronic device may control the retractable touch display screen to fully retract, and a change in the shape of the screen of the electronic device may be as illustrated in FIG. 12.

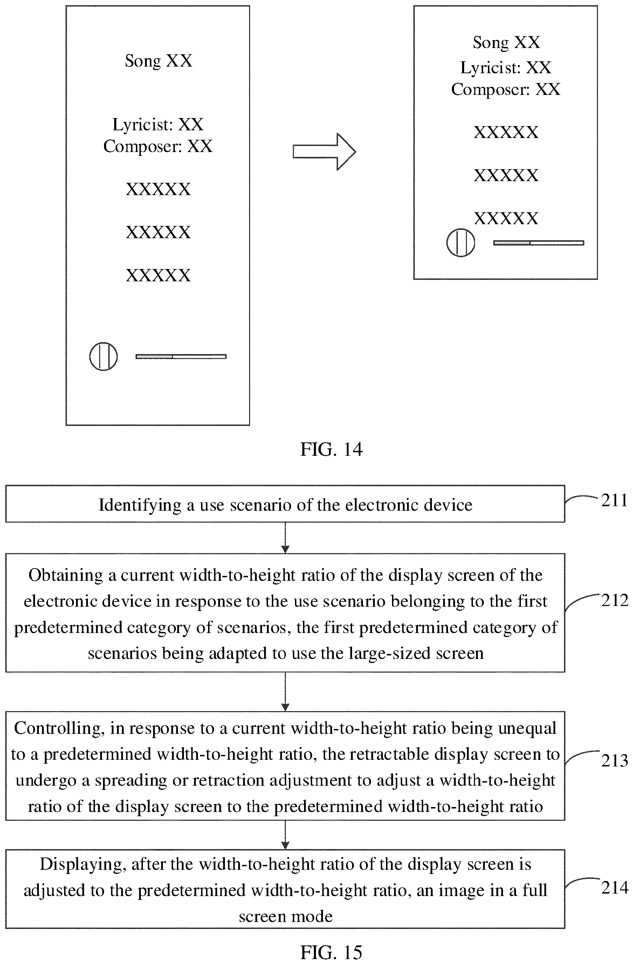

For example, after another period of time, the user uses the electronic device to play music and the electronic device does not perform any other tasks. That is, at this moment, the electronic device is in the music-playing-only scenario, as illustrated in FIG. 13. After detecting that the electronic device is in the music-playing-only scenario, the electronic device may detect that the current use scenario belongs to the second predetermined category of scenarios. In this case, the electronic device may obtain a time length for which the music-playing-only scenario has lasted and detect whether the time length is greater than or equal to the second predetermined threshold. For example, the electronic device remains in the music-playing-only scenario for a period of time thereafter. At a moment T3, the electronic device detects that the time length for which the electronic device has been in the music-playing-only scenario is equal to the second predetermined threshold (e.g., 10 minutes). Then, the electronic device may detect whether the retractable touch display screen has been retracted to the maximum extent. For example, the electronic device detects that the retractable touch display screen is not retracted to the maximum extent at this moment. In this case, the electronic device may control the retractable touch display screen to retract, until the retractable touch display screen is fully retracted, and a change in the shape of the screen of the electronic device may be as illustrated in FIG. 14.

It can be understood that in the embodiments of the present disclosure, the electronic device can automatically control the retractable touch display screen to spread out or retract under different use scenarios, which can enhance the operability and convenience of the electronic device, provide better use experience, and improve the intelligence of the electronic device. Also, the retraction of the retractable touch display screen in some scenarios can protect the retractable touch display screen.

FIG. 15 is yet another flowchart of a device control method according to an embodiment of the present disclosure. The device control method may be applied in the electronic device that may include the retractable display screen. Referring to FIG. 15, the device control method may include actions at 211 to 214.

At 211, a use scenario of the electronic device is identified.

For example, the electronic device may firstly identify its current use scenario.

At 212, a current width-to-height ratio of the display screen of the electronic device is obtained in response to the use scenario belonging to a first predetermined category of scenarios. The first predetermined category of scenarios is adapted to use a large-sized screen.

For example, after the current use scenario is identified, the electronic device may detect whether the current use scenario is the first predetermined category of scenarios. Scenarios in the first predetermined category of scenarios may be predetermined scenarios adapted to use the large-sized screen. For example, the first predetermined category of scenarios may include scenarios such as video-playing scenarios or game-playing scenarios.

In response to detecting that the current use scenario belongs to the first predetermined category of scenarios, e.g., the current use scenario is a video-playing scenario, the electronic device may obtain the current width-to-height ratio of the display screen.

It should be noted that the width-to-height ratio is a ratio between a width and a height of the display screen or an image. For example, common width-to-height ratios include 4:3, 16:9, and so on.

In an implementation, in response to detecting that the current use scenario does not belong to the first predetermined category of scenarios, the electronic device may perform other operations.

At 213, the retractable display screen is controlled, in response to the current width-to-height ratio being unequal to a predetermined width-to-height ratio, to undergo a spreading or retraction adjustment to adjust a width-to-height ratio of the display screen to the predetermined width-to-height ratio.

At 214, an image is displayed in a full screen mode after the current width-to-height ratio of the display screen is adjusted to the predetermined width-to-height ratio.

For example, after obtaining the current width-to-height ratio of the display screen, the electronic device may detect whether the current width-to-height ratio is equal to the predetermined width-to-height ratio.

In an implementation, the predetermined width-to-height ratio may be 16:9 since the first predetermined category of scenarios are adapted to use the large-sized screen. Of course, in other implementations, the predetermined width-to-height ratio may be other values, e.g., 1.85:1, 2.35:1, etc.

When the current width-to-height ratio detected is equal to the predetermined width-to-height ratio, the electronic device may not have to perform the spreading or retraction adjustment on the retractable display screen. For example, when the current width-to-height ratio of the display screen of the electronic device is 16:9, the electronic device can display a current picture in a width-to-height ratio of 16:9. For example, the electronic device may display a video image or an image of a game interface in the width-to-height ratio of 16:9.

When the current width-to-height ratio detected is unequal to the predetermined width-to-height ratio, the electronic device may control the retractable display screen to undergo the spreading or retraction adjustment, to adjust the current width-to-height ratio of the display screen to the predetermined width-to-height ratio. That is, at this moment, the electronic device may spread or retract the retractable display screen, to adjust the width-to-height ratio of the display screen to the predetermined width-to-height ratio.

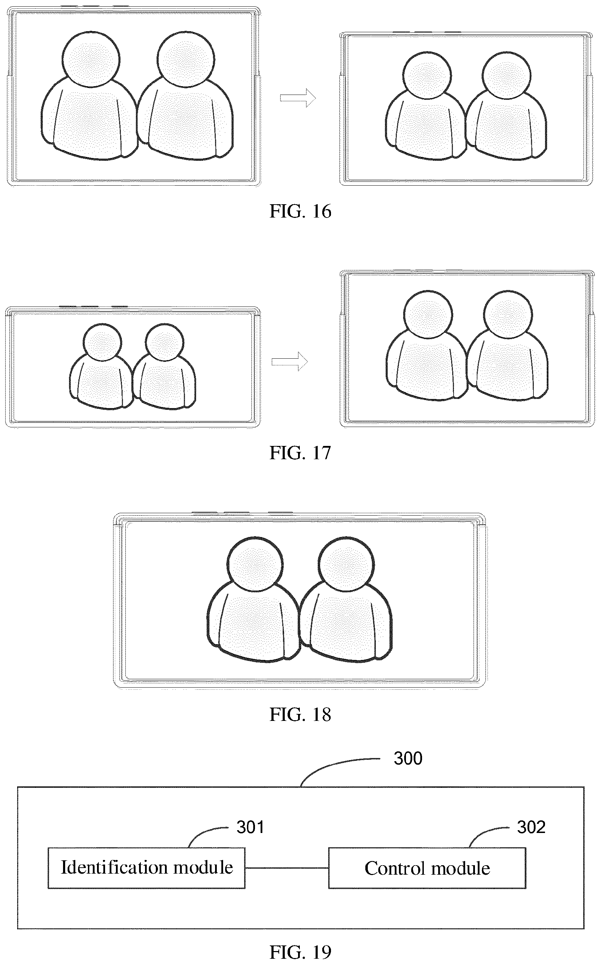

For example, based on the electronic device illustrated in FIG. 1, which is in a landscape mode and the display screen of which has a current width-to-height ratio of 4:3 (i.e., 16:12), the electronic device may retract the retractable display screen in a height direction to adjust the width-to-height ratio of the display screen from 4:3 (16:12) to 16:9, as illustrated in FIG. 16. After adjusting the width-to-height ratio to 16:9, the electronic device may play images in the full screen mode. For example, video images or images of a game interface may be played in the full screen mode. It can be understood that in the full screen mode, the width-to-height ratio of the displayed image is the predetermined width-to-height ratio.

For example, the user uses the electronic device to play a video in the landscape mode. In this case, the retractable display screen of the electronic device is in a fully retracted state. That is, the retractable display screen of the electronic device has not undergone any spreading or retraction at all. For example, the current width-to-height ratio of the electronic device is 2:1 (i.e., 16:8). The electronic device may spread the retractable display screen in the height direction to adjust the width-to-height ratio of the display screen from 2:1 (16:8) to 16:9, as illustrated in FIG. 17. After adjusting the width-to-height ratio to 16:9, the electronic device may play images in the full screen mode. For example, video images or images of a game interface may be played in the full screen mode. It can be understood that in the full screen mode, the width-to-height ratio of the displayed image is the predetermined width-to-height ratio.

It should be noted that in an implementation, the electronic device may obtain in advance a width and a height of the display screen of the electronic device when the retractable display screen has not undergone any spreading or retraction, and calculate a corresponding width-to-height ratio. For example, as illustrated in FIG. 18, when the retractable display screen illustrated in FIG. 1 has not undergone any spreading or retraction and is in the landscape mode, the width and the height of the display screen of the electronic device are 16 cm and 8 cm, respectively, and the width-to-height ratio is 2:1.

In an implementation, the electronic device may obtain a spreading length or a retraction length of the retractable display screen in the following manner. For example, the retractable display screen spreads out or retracts at a constant speed v. Therefore, the spreading or retraction length S of the retractable display screen of the electronic device satisfies S= vt, where t represents time elapsed for the spreading or retraction of the retractable display screen. For example, v is 1 cm/sec, in which case when the electronic device obtains that the retractable display screen has spread outwards for 1 second, the spreading length is 1 cm; and when the electronic device obtains that the retractable display screen has retracted inwards for 2 seconds, the retraction length is 2 cm.

Under the premise that the width and the height of the display screen of the electronic device, when the retractable display screen has not undergone any spreading or retraction, can be obtained and the spreading length or retraction length of the display screen can be calculated, the electronic device records the spread outing length or the retraction length whenever the retractable display screen spreads out or retracts, thereby obtaining the width and the height of the display screen of the electronic device at each moment.

According to the above manner, the electronic device can obtain exactly how much the retractable display screen has spread out or retracted in length, thereby facilitating an adjustment of the width-to-height ratio of the display screen.

It can be understood that in the embodiments of the present disclosure, the electronic device can adjust the width-to-height ratio of the retractable display screen to the predetermined width-to-height ratio by means of a spreading or retraction adjustment and display an image in the full screen mode by using the predetermined width-to-height ratio. The use of the predetermined width-to-height ratio to display the image can provide an optimal viewing effect of the image. That is, according to the embodiments of the present disclosure, on the one hand, the flexibility of the spreading or retraction adjustment of the retractable display screen is improved, and on the other hand, the viewing effect of images is improved.

FIG. 19 is a block diagram showing a structure of a device control apparatus according to an embodiment of the present disclosure. The device control apparatus can be applied in the electronic device that may include the retractable display screen. A device control apparatus 300 may include an identification module 301 and a control module 302.

The identification module 301 is configured to identify a use scenario of the electronic device.

The control module 302 is configured to control, based on the use scenario, the retractable display screen to spread out or retract.

In an implementation, the control module 302 can be configured to control, in response to the use scenario belonging to a first predetermined category of scenarios, the retractable display screen to spread out.

In an implementation, the control module 302 can be further configured to control, in response to the use scenario belonging to a second predetermined category of scenarios, the retractable display screen to retract.

In an implementation, the control module 302 can be configured to: control, in response to the use scenario belonging to the first predetermined category of scenarios and the retractable display screen not spreading out to a maximum extent, the retractable display screen to spread out, until the retractable display screen spreads out to the maximum extent.

In an implementation, the control module 302 can be configured to: detect, in response to the use scenario belonging to the first predetermined category of scenarios, whether a picture displayed by the electronic device is in a stationary state; and control, in response to the picture displayed by the electronic device not being in the stationary state and the retractable display screen not spreading out to the maximum extent, the retractable display screen to spread out, until the retractable display screen spreads out to the maximum extent.

In an implementation, the control module 302 can be further configured to: obtain, in response to the picture displayed by the electronic device being in the stationary state, a first time length for which the picture displayed by the electronic device has been in the stationary state; generate prompt information in response to the first time length being greater than or equal to a first predetermined threshold, the prompt information being configured to query whether to retract the retractable display screen; and receive feedback information, and perform, based on the feedback information, spreading or retraction control on the retractable display screen, the feedback information being feedback to the prompt information.

In an implementation, the control module 302 can be further configured to: obtain, in response to the use scenario belonging to the second predetermined category of scenarios, a second time length for which the electronic device has been in the use scenario; and control, in response to the second time length being greater than or equal to a second predetermined threshold and the retractable display screen not retracting to a maximum extent, the retractable display screen to retract, until the retractable display screen retracts to the maximum extent.

In an implementation, the control module 302 can be further configured to: obtain, in response to the use scenario belonging to a first predetermined category of scenarios, a current width-to-height ratio of the display screen of the electronic device, the first predetermined category of scenarios being adapted to use a large-sized screen; control, in response to the current width-to-height ratio being unequal to a predetermined width-to-height ratio, the retractable display screen to undergo a spreading or retraction adjustment, to adjust the width-to-height ratio of the display screen to the predetermined width-to-height ratio; and display, after the width-to-height ratio of the display screen is adjusted to the predetermined width-to-height ratio, an image in a full screen mode.

According to an embodiment of the present disclosure, a computer-readable storage medium is provided. The computer-readable storage medium has a computer program stored thereon. The computer program, when executed on a computer, causes the computer to perform actions of the device control method according to the embodiments of the present disclosure.

According to an embodiment of the present disclosure, an electronic device is further provided. The electronic device includes a memory and a processor. The processor is configured to perform, through invoking a computer program stored in the memory, actions of the device control method according to the embodiments of the present disclosure.

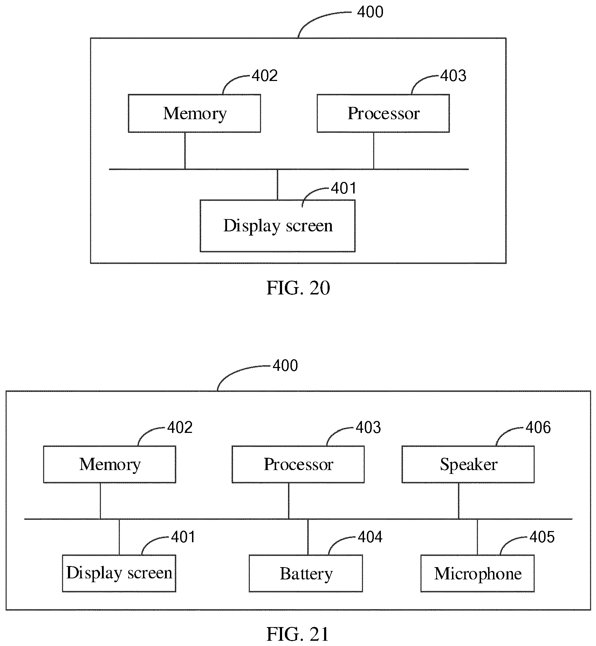

For example, the electronic device may be a mobile terminal such as a tablet computer or a smartphone. Reference may be made to FIG. 20, which is a block diagram showing a structure of an electronic device according to an embodiment of the present disclosure.

The electronic device 400 may include components such as a display screen 401, a memory 402, a processor 403, etc. It is conceivable for those skilled in the art that the electronic device is not limited to the structure of the electronic device illustrated in FIG. 20 and may include more or fewer components than illustrated, or a combination of some components, or a different arrangement of components.

The display screen 401 may be a retractable display screen. The retractable display screen may be a retractable display panel. The retractable display screen may be a flexible display screen, which may be bent, curled, folded, etc. For the electronic device configured with the retractable display screen, a visible size of the screen can be increased by spreading the retractable display screen or reduced by retracting the retractable display screen.

The memory 402 may be configured to store applications and data. The applications stored in the memory 402 contain executable codes. The applications may constitute various functional modules. The processor 403 performs various functional applications and data processing by executing the applications stored in the memory 402.

The processor 403 is a control center of the electronic device, which connects various parts of the entire electronic device using various interfaces and wiring, and is configured to execute various functions of the electronic device and process data by running or executing the applications stored in the memory 402 and by invoking data stored in memory 402, thereby monitoring the electronic device as a whole.

In this embodiment, the processor 403 in the electronic device may load executable codes corresponding to processes of one or more applications into the memory 402 in accordance with the following instructions, and run the applications stored in the memory 402 to: identify a use scenario of the electronic device; and control, based on the use scenario, the retractable display screen to spread out or retract.

Referring to FIG. 21, the electronic device 400 may include the display screen 401, the memory 402, the processor 403, a battery 404, a microphone 405, a speaker 406, and other components.

The display screen 401 may be a retractable display screen. The retractable display screen may be a retractable display panel. The retractable display screen may be a flexible display screen, which may be bent, curled, folded, etc. For the electronic device configured with the retractable display screen, a visible size of the screen can be increased by spreading the retractable display screen or reduced by retracting the retractable display screen. The display screen 401 may also have a touch operation function.

The memory 402 may be configured to store applications and data. The applications stored in the memory 402 contain executable codes. The applications may constitute various functional modules. The processor 403 is configured to perform various functional applications and data processing by executing the applications stored in the memory 402.

The processor 403 is a control center of the electronic device, which connects various parts of the entire electronic device using various interfaces and wiring, and is configured to execute various functions of the electronic device and process data by running or executing the applications stored in the memory 402 and by invoking data stored in memory 402, thereby monitoring the electronic device as a whole.

The battery 404 may be configured to supply power to various modules and components of the electronic device.

The microphone 405 may be configured to pick up sound signals from a surrounding environment, e.g., to receive voice instructions from the user, etc.

The speaker 406 may be configured to play sound signals.

In this embodiment, the processor 403 in the electronic device may load executable codes corresponding to processes of one or more applications into the memory 402 in accordance with the following instructions, and executes the applications stored in the memory 402 to: identify a use scenario of the electronic device; and control, based on the use scenario, the retractable display screen to spread out or retract.

In an implementation, when controlling, based on the use scenario, the retractable display screen to spread out or retract, the processor 403 may control, in response to the use scenario belonging to the first predetermined category of scenarios, the retractable display screen to spread out.

In an implementation, when controlling, based on the use scenario, the retractable display screen to spread out or retract, the processor 403 may control, in response to the use scenario belonging to the second predetermined category of scenarios, the retractable display screen to retract.

In an implementation, when controlling, in response to the use scenario belonging to the first predetermined category of scenarios, the retractable display screen to spread out, the processor 403 may control, in response to the use scenario belonging to the first predetermined category of scenarios and the retractable display screen not spreading out to a maximum extent, the retractable display screen to spread out, until the retractable display screen spreads out to the maximum extent.

In an implementation, when controlling, in response to the use scenario belonging to the first predetermined category of scenarios and the retractable display screen not spreading out to the maximum extent, the retractable display screen to spread out, until the retractable display screen spreads out to the maximum extent, the processor 403 may detect, in response to the use scenario belonging to the first predetermined category of scenarios, whether a picture displayed by the electronic device is in a stationary state; and control, in response to the picture displayed by the electronic device not being in the stationary state and the retractable display screen not spreading out to the maximum extent, the retractable display screen to spread out, until the retractable display screen spreads out to the maximum extent.

In an implementation, the processor 403 can be further configured to: obtain, in response to the picture displayed by the electronic device being in the stationary state, a first time length for which the picture displayed by the electronic device has been in the stationary state; generate prompt information in response to the first time length being greater than or equal to a first predetermined threshold, the prompt information being configured to query whether to retract the retractable display screen; and receive feedback information, and perform, based on the feedback information, spreading or retraction control on the retractable display screen, the feedback information being feedback to the prompt information.

In an implementation, when controlling, in response to the use scenario belonging to the second predetermined category of scenarios, the retractable display screen to retract, the processor 403 may obtain, in response to the use scenario belonging to the second predetermined category of scenarios, a second time length for which the electronic device has been in the use scenario, and control, in response to the second time length being greater than or equal to a second predetermined threshold and the retractable display screen not retracting to a maximum extent, the retractable display screen to retract, until the retractable display screen retracts to the maximum extent.

In an implementation, when controlling, based on the use scenario, the retractable display screen to spread out or retract, the processor 403 may obtain, in response to the use scenario belonging to a first predetermined category of scenarios, a current width-to-height ratio of the display screen of the electronic device, the first predetermined category of scenarios being adapted to use a large-sized screen; control, in response to the current width-to-height ratio being unequal to a predetermined width-to-height ratio, the retractable display screen to undergo a spreading or retraction adjustment, to adjust the width-to-height ratio of the display screen to the predetermined width-to-height ratio; and display, after the width-to-height ratio of the display screen is adjusted to the predetermined width-to-height ratio, an image in a full screen mode.

In the above embodiments, description of respective embodiments is emphasized differently. For parts that are not detailed in some embodiments, reference can be made to the detailed description of the device control method, and details thereof are omitted here.

The device control apparatus according to the embodiments of the present disclosure is of the same concept as the device control method according to the above embodiments. Any of the methods according to the device control method embodiments can be run on the device control apparatus, and for a specific implementation process of the method, reference can be made to the device control method embodiments for details, and the description thereof is omitted here.

It should be noted that, for the device control method according to the embodiments of the present disclosure, it can be understood by those skilled in the art that all or a part of the processes for implementing the device control method according to the embodiments of the present disclosure can be accomplished by relevant hardware controlled by a computer program. The computer program may be stored in a computer-readable storage medium, e.g., a memory, and executed by at least one processor, and may include, when executed, actions such as those of the embodiments of the device control method. The storage medium may be a magnetic disk, an optical disk, a Read Only Memory (ROM), a Random Access Memory (RAM), etc.

For the device control apparatus according to the embodiments of the present disclosure, individual functional modules in the device control apparatus may be integrated in one processing chip or may be separately physically present, or two or more modules may be integrated in one module. The integrated module may be achieved in the form of hardware, or may be achieved in the form of a software functional module. When the integrated module is achieved in the form of a software functional module and sold or used as an independent product, the integrated module may be stored in a computer-readable storage medium. The storage medium is, for example, an ROM, a magnetic disk, or an optical disk.

The device control method and apparatus, the storage medium, and the electronic device according to the embodiments of the present disclosure are described in detail above. Specific examples have been applied herein to illustrate principles and implementations of the present disclosure. The description of the above embodiments is only intended to assist in understanding the method of the present disclosure and its core ideas. Also, those skilled in the art can make variations in specific implementations and an application scope of the present disclosure based on the ideas of the present disclosure. In summary, the contents of this specification should not be construed as limiting the present disclosure.

## Claims

1. A device control method, applied in an electronic device comprising a retractable display screen, the method comprising:
identifying a use scenario of the electronic device; and
controlling, based on the use scenario, the retractable display screen to spread out or retract.

2. The device control method according to claim 1, wherein said controlling, based on the use scenario, the retractable display screen to spread out or retract comprises:
controlling, in response to the use scenario belonging to a first predetermined category of scenarios, the retractable display screen to spread out, the first predetermined category of scenarios being adapted to use a large-sized screen.

3. The device control method according to claim 1, wherein said controlling, based on the use scenario, the retractable display screen to spread out or retract comprises:
controlling, in response to the use scenario belonging to a second predetermined category of scenarios, the retractable display screen to retract, the second predetermined category of scenarios being adapted to use a small-sized screen.

4. The device control method according to claim 2, wherein said controlling, in response to the use scenario belonging to the first predetermined category of scenarios, the retractable display screen to spread out comprises:
controlling, in response to the use scenario belonging to the first predetermined category of scenarios and the retractable display screen not spreading out to a maximum extent, the retractable display screen to spread out, until the retractable display screen spreads out to the maximum extent.

5. The device control method according to claim 4, wherein said controlling, in response to the use scenario belonging to the first predetermined category of scenarios and the retractable display screen not spreading out to the maximum extent, the retractable display screen to spread out, until the retractable display screen spreads out to the maximum extent comprises:
detecting, in response to the use scenario belonging to the first predetermined category of scenarios, whether a picture displayed by the electronic device is in a stationary state; and
controlling, in response to the picture displayed by the electronic device not being in the stationary state and the retractable display screen not spreading out to the maximum extent, the retractable display screen to spread out, until the retractable display screen spreads out to the maximum extent.

6. The device control method according to claim 5, further comprising:
obtaining, in response to the picture displayed by the electronic device being in the stationary state, a first time length for which the picture displayed by the electronic device has been in the stationary state;
generating prompt information in response to the first time length being greater than or equal to a first predetermined threshold, the prompt information being configured to query whether to retract the retractable display screen; and
receiving feedback information, and performing, based on the feedback information, spreading or retraction control on the retractable display screen, the feedback information being feedback to the prompt information.

7. The device control method according to claim 3, wherein said controlling, in response to the use scenario belonging to the second predetermined category of scenarios, the retractable display screen to retract comprises:
obtaining, in response to the use scenario belonging to the second predetermined category of scenarios, a second time length for which the electronic device has been in the use scenario; and
controlling, in response to the second time length being greater than or equal to a second predetermined threshold and the retractable display screen not retracting to a maximum extent, the retractable display screen to retract, until the retractable display screen retracts to the maximum extent.

8. The device control method according to claim 1, wherein said controlling, based on the use scenario, the retractable display screen to spread out or retract comprises:
obtaining, in response to the use scenario belonging to a first predetermined category of scenarios, a current width-to-height ratio of the display screen of the electronic device, the first predetermined category of scenarios being adapted to use a large-sized screen;
controlling, in response to the current width-to-height ratio being unequal to a predetermined width-to-height ratio, the retractable display screen to undergo a spreading or retraction adjustment, to adjust a width-to-height ratio of the display screen to the predetermined width-to-height ratio; and
displaying, after the width-to-height ratio of the display screen is adjusted to the predetermined width-to-height ratio, an image in a full screen mode.

9. A device control apparatus, applied in an electronic device comprising a retractable display screen, the apparatus comprising:
an identification module configured to identify a use scenario of the electronic device; and
a control module configured to control, based on the use scenario, the retractable display screen to spread out or retract.

10. The device control apparatus according to claim 9, wherein the control module is configured to:
control, in response to the use scenario belonging to a first predetermined category of scenarios, the retractable display screen to spread out, the first predetermined category of scenarios being adapted to use a large-sized screen.

11. The device control apparatus according to claim 9, wherein the control module is configured to:
control, in response to the use scenario belonging to a second predetermined category of scenarios, the retractable display screen to retract, the second predetermined category of scenarios being adapted to use a small-sized screen.

12. A computer-readable storage medium, having a computer program stored thereon, wherein the computer program, when executed on a computer, causes the computer to perform the method according to claim 1.

13. An electronic device, comprising a memory, a processor, and a retractable display screen, wherein the processor is configured to, through invoking a computer program stored in the memory:
identify a use scenario of the electronic device; and
control, based on the use scenario, the retractable display screen to spread out or retract.

14. The electronic device according to claim 13, wherein the processor is configured to:
control, in response to the use scenario belonging to a first predetermined category of scenarios, the retractable display screen to spread out, the first predetermined category of scenarios being adapted to use a large-sized screen.

15. The electronic device according to claim 13, wherein the processor is configured to:
control, in response to the use scenario belonging to a second predetermined category of scenarios, the retractable display screen to retract, the second predetermined category of scenarios being adapted to use a small-sized screen.

16. The electronic device according to claim 14, wherein the processor is configured to:
control, in response to the use scenario belonging to the first predetermined category of scenarios and the retractable display screen not spreading out to a maximum extent, the retractable display screen to spread out, until the retractable display screen spreads out to the maximum extent.

17. The electronic device according to claim 16, wherein the processor is configured to:
detect, in response to the use scenario belonging to the first predetermined category of scenarios, whether a picture displayed by the electronic device is in a stationary state; and
control, in response to the picture displayed by the electronic device not being in the stationary state and the retractable display screen not spreading out to the maximum extent, the retractable display screen to spread out, until the retractable display screen spreads out to the maximum extent.

18. The electronic device according to claim 17, wherein the processor is further configured to:
obtain, in response to the picture displayed by the electronic device being in the stationary state, a first time length for which the picture displayed by the electronic device has been in the stationary state;
generate prompt information in response to the first time length being greater than or equal to a first predetermined threshold, the prompt information being configured to query whether to retract the retractable display screen; and
receive feedback information, and performing, based on the feedback information, spreading or retraction control on the retractable display screen, the feedback information being feedback to the prompt information.

19. The electronic device according to claim 15, wherein the processor is configured to:
obtain, in response to the use scenario belonging to the second predetermined category of scenarios, a second time length for which the electronic device has been in the use scenario; and
control, in response to the second time length being greater than or equal to a second predetermined threshold and the retractable display screen not retracting to a maximum extent, the retractable display screen to retract, until the retractable display screen retracts to the maximum extent.

20. The electronic device according to claim 13, wherein the processor is configured to:
obtain, in response to the use scenario belonging to a first predetermined category of scenarios, a current width-to-height ratio of the display screen of the electronic device, the first predetermined category of scenarios being adapted to use a large-sized screen;
control, in response to the current width-to-height ratio being unequal to a predetermined width-to-height ratio, the retractable display screen to undergo a spreading or retraction adjustment, to adjust a width-to-height ratio of the display screen to the predetermined width-to-height ratio; and
display, after the width-to-height ratio of the display screen is adjusted to the predetermined width-to-height ratio, an image in a full screen mode.
